Europäisches Patentamt

European Patent Office

Office européen des brevets

(11) Veröffentlichungsnummer: **0 071 215**
**B1**

(12) **EUROPÄISCHE PATENTSCHRIFT**

(19)

(45) Veröffentlichungstag der Patentschrift:
**08.10.86**

(21) Anmeldenummer: **82106687.5**

(22) Anmeldetag: **23.07.82**

(51) Int. Cl.⁴: **G 01 S 13/87**

(54) 3D-Luftraum-Überwachungsradar.

(30) Priorität: **27.07.81 DE 3129492**

(43) Veröffentlichungstag der Anmeldung:
**09.02.83 Patentblatt 83/6**

(45) Bekanntmachung des Hinweises auf die Patenterteilung:
**08.10.86 Patentblatt 86/41**

(84) Benannte Vertragsstaaten:
**BE CH DE FR GB IT LI NL**

(56) Entgegenhaltungen:
**DE - B - 1 277 950**
**DE - B - 1 952 103**
**DE - B - 2 040 018**
**US - A - 3 971 020**
**US - A - 4 158 840**

**Electronics & Power, Oktober 1979, S. 694-698**

(73) Patentinhaber: **Siemens Aktiengesellschaft Berlin und München, Wittelsbacherplatz 2, D-8000 München 2 (DE)**

(72) Erfinder: **Beyer, Günter, Dipl.-Ing., Angerfeldstrasse 14, D-8031 Gilching (DE)**
Erfinder: **Hauptmann, Rudolf, Dipl.-Ing., Augustenfelderstrasse 23, D-8060 Dachau (DE)**
Erfinder: **Peters, Rainer, Dipl.-Ing., Goerdelerstrasse 12, D-8025 Unterhaching (DE)**

## Beschreibung

Die Erfindung bezieht sich auf ein 3D-Luftraum-Überwachungsradar mit einer Radardaten-Signalverarbeitung mit Zielparameterextraktion und einer sich daran anschliessenden Zielfolgeeinrichtung, in der zum Aufbau einer Spur eines Ziels alle gemessenen Zieldaten, nämlich Entfernung, Azimut und Elevation, gespeichert und jene Daten extrapoliert werden, die zu Zielen gehören, von denen bereits eine Spur aufgebaut ist, und mit einer um eine vertikal verlaufende Drehachse rotierenden Rundsuch-Antenne, die mit einem breiten Elevationsbedeckungsstrahl bei jeder Antennenumdrehung den zu überwachenden Luftraum im gesamten zu erfassenden Elevationsbereich beleuchtet und deren bleistiftartige Empfangskeule in der Elevationsebene mit Hilfe einer Steuereinrichtung zur Steuerung des Elevationswinkels der Empfangskeule elektronisch und/oder mechanisch und in der Azimutebene mittels der Rotationsbewegung mechanisch gesteuert wird. Ein solches Luftraum-Überwachungsradar ist aus dem Aufsatz von J.W. Sutherland: «Air Defence Radar for the 1980s» in der Zeitschrift «Electronics & Power», Oktober 1979, Seiten 694 bis 698, insbesondere Seiten 697 bis 698, bekannt.

Wird der gesamte zu überwachende Luftraum zeitsequentiell abgetastet, so ergibt sich eine Datenerneuerungsrate von $\Delta\theta_A \cdot \Delta\theta_E / (\text{TOT} \cdot 360 \cdot \theta_{E\text{max}})$, wobei folgendes gilt:

TOT: Zielbeleuchtungszeit = N/PRF (= Pulswiederholfrequenz), wenn N Pulse zur Nachintegration nötig sind;

$\Delta\theta_A$: Antennenöffnung im Azimut in Altgrad

$\Delta\theta_E$: Antennenöffnung in der Elevation in Altgrad

$\theta_{E\text{max}}$: Maximale Höhenbedeckung in Altgrad.

Die Datenerneuerungsrate ist also abhängig von den Azimut- und Elevations-Auflösungen. Bei hohen Auflösungen wird die Datenerneuerungsrate sehr klein. Wird ein Tracker an das Radar angeschlossen, so ist dessen Spurgüte von der Genauigkeit der Zieldaten und von der Datenerneuerungsrate abhängig. Die Forderung nach hoher Genauigkeit ist bei 3D-Akquisitionsradars mit eindimensionaler Höhenabtastung jedoch mit der Forderung nach einer hohen Datenerneuerungsrate unvereinbar.

In diesem Zusammenhang ist es bekannt, die Zielbeleuchtungszeit klein zu halten, indem die zur Nachintegration erforderliche Pulszahl N gering gehalten wird. Dies bedeutet jedoch, dass grosse Sendeleistungen installiert werden müssen, um die notwendige Reichweite zu erzielen. Ausserdem wird die Clutterunterdrückung schlecht. Es ist bekannt, die Abtastungen nicht im gesamten Luftraumvolumen mit derselben Auflösung durchzuführen. In einigen Bereichen, z.B. bei grösseren Elevationswinkeln, wird somit eine gröbere Auflösung und damit eine geringere Genauigkeit in Kauf genommen.

Aufgabe der Erfindung ist es, bei einem 3D-Luftraum-Überwachungsradar der eingangs genannten Art demgegenüber die Datenerneuerungsrate für die Zielfolgeeinrichtung bei gleichbleibender Genauigkeit heraufzusetzen.

Gemäss der Erfindung wird diese Aufgabe dadurch gelöst, dass der Elevationswinkel der Empfangskeule mittels der Steuereinrichtung im Rahmen eines regulären Abtastprogramms so gesteuert wird, dass er während einer Antennenumdrehung konstant bleibt und jeweils zu Beginn der nächsten Antennenumdrehung einen neuen Wert annimmt, so dass sich eine zeilenförmige Luftraumabtastung ergibt, dass eine Einrichtung zur kurzzeitigen Unterbrechung des regulären Abtastprogramms der Steuereinrichtung vorgesehen ist, die von der Zielfolgeeinrichtung jeweils in solchen Azimut- und Echolaufzeitbereichen aktiviert ist, in denen aufgrund der in der Zielfolgeeinrichtung ermittelten Zieldaten Zielechos aus einem Elevationswinkel erwartet werden können, der vom Elevationswinkel der gerade abgetasteten Zeile abweicht, wobei während einer solchen Unterbrechung die in der Zielfolgeeinrichtung ermittelten Zielelevationsdaten auf die Steuereinrichtung zur Steuerung des Elevationswinkels zurückgekoppelt werden, so dass während dieser Unterbrechung der Empfangskeulen-Elevationswinkel des jeweils erwarteten Zielechos eingeschaltet ist.

Somit kann das erwartete Ziel nach jeder Antennenumdrehung abgetastet werden und nicht nur dann, wenn es aufgrund des normal ablaufenden Abtastprogramms für die zeilenförmige Luftraumabtastung fällig wäre, ohne dass beim Suchvorgang wesentliche Lücken entstehen. Die Datenerneuerungsrate steigt somit um den Faktor $\theta_{E\text{max}}/\Delta\theta_E$.

Die Erfindung wird im folgenden anhand von vier Figuren näher erläutert.

Es zeigen

Fig. 1 den Empfangskeulen-Abtastvorgang während eines normal ablaufenden Abtastprogramms,

Fig. 2 ein Beleuchtungsdiagramm und Empfangskeulen-Abtastdiagramme in der Elevationsebene,

Fig. 3 das Blockschaltbild der Empfangsseite eines 3D-Luftraum-Überwachungsradars nach der Erfindung,

Fig. 4 in einer Schrägansicht den Suchvorgang in einer konstanten Elevation mit Suchlücken, in denen zur Zieldatenerneuerung auf einen anderen Elevationswinkel umgeschaltet wird.

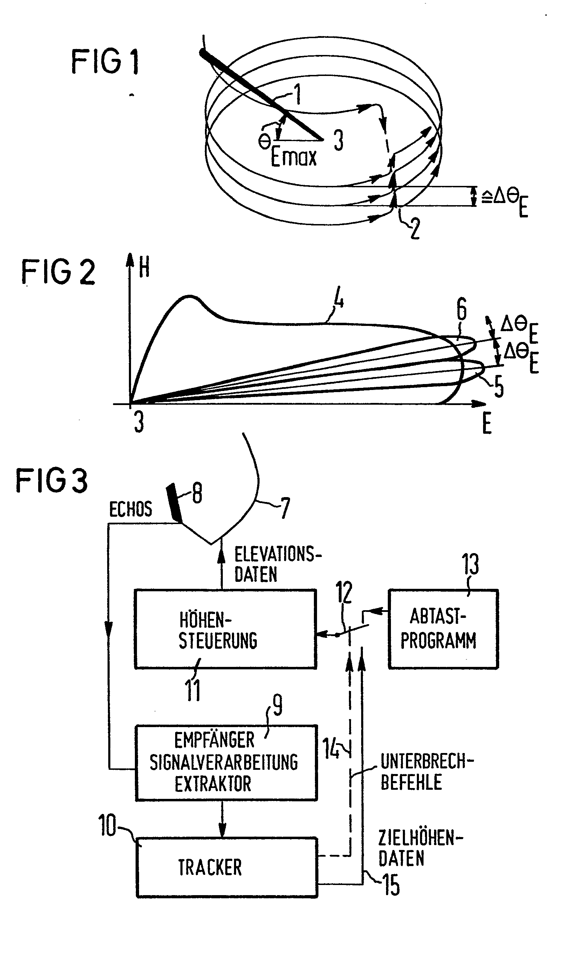

Fig. 1 zeigt in einer Schrägansicht das Prinzip des Abtastvorgangs einer Antennen-Empfangskeule 1 bei normal ablaufendem Abtastprogramm. Der Elevationswinkel $\theta_E$ der bleistiftstrahlartigen Empfangskeule 1 bleibt jeweils während einer Antennenumdrehung konstant und nimmt zu Beginn der nächsten Antennenumdrehung einen neuen Wert an, der um $\Delta\theta_E$ vom vorhergehenden Wert abweicht. Die Azimutlage, an welcher der Elevationswinkelwechsel stets stattfindet, ist mit 2 bezeichnet. Die von einer Antennenposition 3 ausgehende Empfangskeule 1 dreht sich im dargestellten Beispiel entgegen dem Uhrzeigersinn und springt jeweils nach einer Umdrehung in der Azimutlage 2 um den Winkel $\Delta\theta_E$ nach oben. Diese

zeilenförmige Abtastung erfolgt bis zum maximalen Elevationswinkel $\theta_{Emax}$. Ist die Umdrehung in der Elevationswinkelstellung $\theta_{Emax}$ beendet, dann springt die Empfangskeule 1 wieder in die Ausgangslage nach ganz unten zurück und der zeilenförmige Abtastvorgang von unten nach oben beginnt von vorne.

Fig. 2 zeigt einen Vertikalschnitt (Abszisse = Entfernung E, Ordinate = Höhe H) durch das von der Antennenposition 3 ausgesendete Beleuchtungsdiagramm 4 und durch zwei nacheinander in der gleichen Azimutlage, d.h. nach einer Antennenumdrehung auftretende Empfangskeulendiagramme 5 und 6 (= Elevationsdiagramme). Die beiden Empfangskeulen 5 und 6 weichen hinsichtlich ihres Elevationswinkels um $\Delta\theta_E$ voneinander ab. Da jedes zu verfolgende Ziel bei jeder Antennenumdrehung Echosignale abgeben soll, ist es Voraussetzung für das Funktionieren des 3D-Überwachungsradars nach der Erfindung, dass bei jeder Antennenumdrehung der Rundsuch-Antenne der zu überwachende Luftraum in der ganzen Elevation durch das fächerstrahlartige Beleuchtungsdiagramm 4 erfasst wird. Es kann zu diesem Zweck als Beleuchtungsdiagramm 4 beispielsweise ein $cosec^2$-Diagramm verwendet werden.

Fig. 3 zeigt das Blockschaltbild des Empfangs- und Auswerteteils eines 3D-Überwachungsradars nach der Erfindung. Von einer Rundsuch-Antenne 7, die sich zur Azimutabtastung um eine vertikale Achse dreht und deren Elevationsabtastung in der beschriebenen Weise zeilenförmig, und zwar elektronisch z.B. mittels Phasensteuerung einer Primärstrahlerreihe 8 oder mittels sogenannter Stacked Beams od. dgl. erfolgt, gelangen die Echosignale wie üblich in einen Empfänger 9 mit Signalverarbeitung und Zielextraktor. Daran schliesst sich ein Tracker 10 (Zielfolgeeinrichtung) an, in dem alle gemessenen Zieldaten (Entfernung, Azimut, Elevation) gespeichert und jene Daten extrapoliert werden, die zu Zielen gehören, von denen bereits eine Spur aufgebaut ist. Der Elevationswinkel der Empfangskeule der Rundsuchantenne 7 wird mittels einer Einrichtung 11 zur Höhensteuerung gesteuert. Die Zuführung des normal ablaufenden Abtastprogramms erfolgt über einen gesteuerten Umschalter 12 von einer Abtastprogrammeinrichtung 13 her. Dieses Programm erzeugt eine zeilenweise Abtastung des Luftraums durch den bleistiftförmigen Empfangsstrahl, wie sie anhand der Fig. 1 beschrieben wurde. Der Umschalter 12 wird von der Abtastprogrammeinrichtung 13 über eine vom Tracker 10 ausgehende Steuerleitung 14 in solchen Zeitbereichen abgeschaltet, in denen aufgrund der im Tracker 10 ermittelten Zieldaten Zielechos aus einem Elevationswinkel erwartet werden können, der vom ansich sonst während des normalen Abtastprogrammablaufs gerade vorliegenden Elevationswinkel abweicht. Über die Steuerleitung 14 laufen somit die Unterbrechbefehle hinsichtlich des normal ablaufenden Abtastprogramms. Während einer solchen Unterbrechung schaltet der Umschalter 12 auf eine Datenleitung 15 um und überträgt die im Tracker 10 ermittelten Zielhöhendaten auf die Einrichtung 11 zur Höhensteuerung, so dass während dieser Unterbrechung der Empfangskeulen-Elevationswinkel des jeweils erwarteten Zielechos eingeschaltet ist. Während einer solchen Unterbrechung wird somit der zeilenförmig ablaufende Suchvorgang abgeschaltet und zur Erneuerung der Daten eines vorher erfassten Zieles auf den Elevationswinkel dieses Zieles kurzzeitig umgeschaltet.

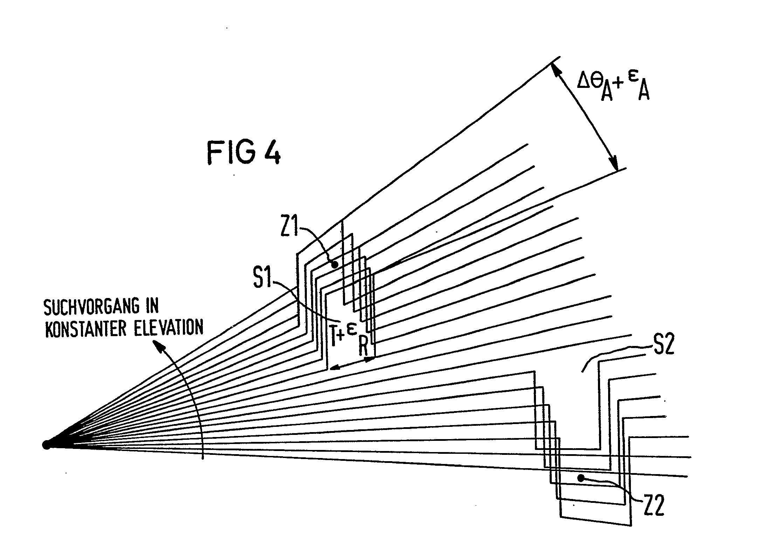

Anhand der Fig. 4 wird im folgenden die Arbeitsweise des 3D-Luftüberwachungsradars nach der Erfindung beschrieben. Es ist ein Suchvorgang in konstanter Elevation dargestellt. Die Abtastung des Luftraumes läuft ab, wie sie im Zusammenhang mit der Fig. 1 beschrieben worden ist. Bei einem Elevationswinkel $\theta_E$ und einem Azimutwinkel $\theta_A$ wird im Abstand $\tau$ vom Sendepuls entsprechend der Entfernung R ein Zielecho registriert. Dessen Koordinaten werden an den Tracker weitergemeldet. Bei der nächsten Antennenumdrehung nimmt der Strahl der Empfangsantenne die Elevationswinkelstellung $\theta_E \pm \Delta\theta_E$ ein. Wird der Azimutwinkel $\theta_A - (\Delta\theta_A/2 + \varepsilon/2)$ überschritten, so kann die Elevationseinrichtung der Empfangsantenne im Zeitintervall von $\tau - (T/2 + \varepsilon_R/2)$ bis $\tau + (T/2 + \varepsilon_R/2)$ zurückgeschaltet werden auf die Elevationswinkelstellung $\theta_E$. Die Rückschaltung unterbleibt, wenn der Azimut grösser wird als $\theta_A + (\Delta\theta_A/2 + \varepsilon_A/2)$. Dieser Vorgang kann bei beliebigem Elevationswinkel $\theta_E \pm n \cdot \Delta\theta_E$ (n ganzzahlig!) wiederholt werden. T ist hierbei die Breite des Sendeimpulses, $\varepsilon_A$ das Erwartungswinkelintervall im Azimut nach einer Antennenumdrehung und $\varepsilon_R$ das Erwartungsentfernungsintervall (entsprechend Zeitintervall) nach einer Antennenumdrehung. Somit können die Ziele, im Beispiel das Ziel Z1 und das Ziel Z2, nach jeder Antennenumdrehung abgetastet werden, ohne dass im Suchvorgang wesentliche Lücken entstehen, die in Fig. 4 mit S1 und S2 bezeichnet sind. Die Datenerneuerungsrate steigt somit um den Faktor $\theta_{Emax}/\Delta\theta_E$.

**Patentanspruch**

1. 3D-Luftraum-Überwachungsradar mit einer Radardaten-Signalverarbeitung (9) mit Zielparameterextraktion und einer sich daran anschliessenden Zielfolgeeinrichtung (10), in der zum Aufbau einer Spur eines Ziels alle gemessenen Zieldaten, nämlich Entfernung, Azimut und Elevation, gespeichert und jene Daten extrapoliert werden, die zu Zielen gehören, von denen bereits eine Spur aufgebaut ist, und mit einer um eine vertikal verlaufende Drehachse rotierenden Rundsuch-Antenne (7), die mit einem breiten Elevationsbedeckungsstrahl (4) bei jeder Antennenumdrehung den zu überwachenden Luftraum im gesamten zu erfassenden Elevationsbereich beleuchtet und deren bleistiftartige Empfangskeule (1) in der Elevationsebene mit Hilfe einer Steuereinrichtung (11, 13) zur Steuerung des Elevationswinkels ($\theta_E$) der Empfangskeule (1) elektronisch und/oder mechanisch und in der Azimutebene mittels der Rotationsbewegung mechanisch gesteuert wird, dadurch gekennzeichnet, dass der Elevationswinkel ($\theta_E$) der Empfangskeule (1) mittels der Steuereinrichtung (11, 13) im Rahmen eines regulären Abtastprogramms so gesteuert wird, dass er während einer Antennenumdrehung konstant bleibt und jeweils zu Beginn der nächsten Antennenumdrehung einen neuen Wert annimmt, so dass sich eine zeilenförmige Luftraumabtastung ergibt, dass eine Einrichtung (12) zur kurzzeitigen Unterbrechung des regulären Abtastprogramms der Steuereinrichtung (11, 13) vorgesehen ist, die von der Zielfolgeeinrichtung (10) jeweils in solchen Azimut- und Echolaufzeitbereichen aktiviert ist, in denen aufgrund der in der Zielfolgeeinrichtung (10) ermittelten Zieldaten Zielechos aus einem Elevationswinkel erwartet werden können, der vom Elevationswinkel der gerade abgetasteten Zeile abweicht, wobei während einer solchen Unterbrechung die in der Zielfolgeeinrichtung (10) ermittelten Zielelevationsdaten auf die Steuereinrichtung zurückgekoppelt werden, so dass während dieser Unterbrechung der Empfangskeulen-Elevationswinkel des jeweils erwarteten Zielechos eingeschaltet ist.

**Claims**

1. An air surveillance 3-D radar comprising a radar data signal processing unit (9) with target parameter extraction and a subsequent follow-up device (10), wherein in order to establish a trace of a target all measured target data, namely distance, azimuth and elevation are stored and those items of data are extrapolated which are assigned to targets, of which a trace has already been established, and comprising an all-round search antenna (7) which rotates around a vertical axis of rotation and which by means of a beam (4) covering a wide elevation in each antenna rotation, illuminates the air space which is to be observed in the overall elevation area to be covered, and the pencil-like receiving lobe (1) of which antenna (7) is electronically and/or mechanically controlled with the aid of a control device (11, 13) for controlling the elevation angle ($\theta_E$) of the receiving lobe (1) in the elevation plane and is mechanically controlled by means of the rotational movement in the azimuth plane, characterised in that the elevation angle ($\theta_E$) of the receiving lobe (1) is controlled by means of the control device (11, 13) within the scope of a regular scanning programme in such a manner that it remains constant during a rotation of the antenna and assumes a new respective value at the beginning of the next rotation of the antenna, so that a rectilinear air space scan is established, that a device (12) is arranged for the temporary interruption of the regular scanning programme of the control device (11, 13) which is respectively activated by the target follow-up device (10) in those azimuth and echo ranges in which target echoes from an elevation angle can be expected as a result of the target data determined in the target follow-up device (10), which angle differs from the elevation angle of the currently scanned row, where during an interruption of this kind the target elevation data determined in the target follow-up device (10) are recoupled to the control device, so that the elevation angle of the receiving lobe of the respectively expected target echo is subtended during the interruption.

**Revendications**

1. Radar de surveillance de l'espace aérien tridimensionnel, comportant un système (9) de traitement des signaux de données du radar avec extraction des paramètres de la cible, et un dispositif (10) de poursuite de cibles, raccordé à ce système et dans lequel, pour l'établissement d'une trajectoire d'une cible, toutes les données mesurées de la cible, à savoir la distance, l'azimut et l'élévation, sont mémorisées et que toutes les données, qui sont relatives à des cibles pour lesquelles une trajectoire a déjà été établie, sont extrapolées, et comportant une antenne omnidirectionnelle (7) tournant autour d'un axe de rotation vertical et qui, lors de chacune de ses rotations, éclaire l'espace aérien à contrôler, avec un large faisceau (4) de balayage en élévation, dans l'ensemble de la zone en élévation à détecter et dont le lobe de réception (1) en forme de crayon est commandé électroniquement et/ou mécaniquement dans le plan de l'élévation à l'aide d'un dispositif de commande (11, 13) servant à commander l'angle d'élévation ($\theta_E$) du lobe de réception (1) et mécaniquement dans le plan de l'azimut au moyen du mouvement de rotation, caractérisé par le fait que l'angle d'élévation ($\theta_E$) du lobe de réception (1) est commandé au moyen du dispositif de commande (11, 13) dans le cadre d'un programme régulier d'exploration par balayage de telle sorte que cet angle reste constant pendant la rotation de l'antenne et prend une nouvelle valeur respectivement au début de la rotation immédiate suivante de l'antenne, de sorte que l'on obtient une exploration linéaire par balayage de l'espace aérien, qu'il est prévu un dispositif (12) qui sert à interrompre pendant un bref intervalle de temps le programme d'exploration régulière par balayage du dispositif de commande (11, 13) et qui est activé par le dispositif de poursuite de cibles (10) respectivement dans des zones azimutales et dans des plages de temps de transit des échos, dans lesquelles, sur la base de données de cible déterminées dans le dispositif (10) de poursuite de cibles, on peut s'attendre à l'apparition d'échos de cibles pour un angle d'élévation qui diffère de l'angle d'élévation de la ligne précisément explorée par balayage, auquel cas pendant une telle interruption, les données de l'élévation de la cible, qui sont déterminées dans le dispositif de poursuite de cibles, sont renvoyées par réaction au dispositif de commande de telle sorte que pendant cette interruption, l'angle d'élévation du lobe de réception de l'écho de cible respectivement attendu est utilisé.

FIG 1

FIG 2

FIG 3

FIG 4

$\Delta\Theta_A + \epsilon_A$

Z1

S1

SUCHVORGANG IN
KONSTANTER ELEVATION

$T + \epsilon_R$

S2

Z2